# EUROPÄISCHE PATENTANMELDUNG

(11) **EP 1 113 256 A2**
(43) Veröffentlichungstag der Anmeldung: **04.07.2001**
(21) Anmeldenummer: 00126929.9
(22) Anmeldetag: 08.12.2000
(51) Int. Cl.: G01M 17/04, G01L 5/28

(54) **Prüfvorrichtung für Kraftfahrzeuge**

(30) Priorität: 29.12.1999 DE 19963556
(71) Anmelder: ROBERT BOSCH GMBH, 70442 Stuttgart (DE)
(72) Erfinder: Anlauf, Juergen, 73035 Goeppingen (DE); Gern, Christian, 73249 Wernau (DE); Fischer, Uwe, 71409 Schwaikheim (DE); Hoss, Reinhard, 73207 Plochingen (DE)

(57) **Zusammenfassung**

Die Erfindung bezieht sich auf eine Prüfvorrichtung für Kraftfahrzeuge mit einem Radaufhängungstester (4), der mindestens eine ein Fahrzeugrad aufzunehmende, mittels einer Antriebseinrichtung in Schwingungen versetzbare Plattform aufweist. Bei geringem Platzbedarf wird ein günstiger Aufbau dadurch erzielt, dass der Radaufhängungstester (4) zusammen mit einer Rollen-Bremsprüfeinrichtung (3) in einem gemeinsamen Rahmen (2) gelagert ist (Fig. 1).

## Beschreibung

Die Erfindung bezieht sich auf eine Prüfvorrichtung für Kraftfahrzeuge mit einem Radaufhängungstester, der mindestens eine ein Fahrzeugrad aufzunehmende, mittels einer Antriebseinrichtung in Schwingungen versetzbare Plattform aufweist.

Eine derartige Prüfvorrichtung ist in der DE 198 23 370 A1 als bekannt ausgewiesen. Bei dieser bekannten Prüfvorrichtung in Form eines Radaufhängungstesters wird mindestens eine Plattform mittels einer darunter befindlichen Antriebs-einrichtung in vertikale Schwingungen versetzt, um ein betreffendes Fahrzeugrad oder beide Fahrzeugräder einer Achse zum Schwingen anzuregen. Derartige Radaufhängungstester arbeiten vorwiegend nach der EUSAMA-Norm. Bei der Prüfung nach der EUSAMA-Norm wird jedes Rad mit einer Frequenz von 3 bis 24 Hz und einer Amplitude von 3 mm angeregt. Während dieses Rüttelvorgangs wird die Aufstandskraft des Rades gemessen und zu der Aufstandskraft in Ruhe ins Verhältnis gesetzt. Der Wert dient zur Beurteilung der Radaufhängung.

Ein weiterer derartiger Radaufhängungstester ist in der DE 198 23 367 A1 angegeben, wobei verschiedene Messmöglichkeiten beschrieben sind.

Bei den bekannten Ausführungsformen werden beispielsweise zwei Plattformen über je eine Exzenterwelle angetrieben, wobei jeder Seite ein Motor mit Schwungmasse zugeordnet ist. Nachdem die Schwingung der Plattformen eine Frequenz von ca. 24 Hz erreicht hat, wird der Antrieb abgeschaltet. Die in der Schwungmasse gespeicherte Energie sorgt für einen verzögerten Auslauf der Anregungsfrequenz. Dadurch wird die Schwingungsfrequenz ausgehend von ca. 24 Hz abnehmend bis ca. 4 Hz durchlaufen, und zu jeder Frequenz kann die zugehörige Bodenhaftung ermittelt werden.

Der Aufbau derartiger Radaufhängungstester mit solchen Antriebsvorrichtungen ist relativ aufwendig.

Der Erfindung liegt die Aufgabe zugrunde, eine Prüfvorrichtung der eingangs genannten Art bereitzustellen, der insbesondere hinsichtlich des Aufbaus und der Unterbringung z. B. in einer Werkstatt günstiger ist.

Diese Aufgabe wird mit den Merkmalen des Anspruches 1 gelöst. Hiernach ist vorgesehen, dass der Radaufhängungstester zusammen mit einer Rollen-Bremsprüfeinrichtung in einem gemeinsamen Rahmen gelagert ist.

Mit diesen Maßnahmen kann der für die Bremsprüfung ohnehin vorhandene Prüfplatz auch für den Radaufhängungstest genutzt werden, so dass kein gesonderter Prüfplatz zur Verfügung gestellt werden muss. Außerdem werden der Rahmen mit verschiedenen Tragelementen und bei entsprechendem Aufbau der Antriebseinrichtung auch der Rollenantrieb doppelt nutzbar.

Eine günstige Anordnung hinsichtlich der Benutzung der Prüfvorrichtung besteht darin, dass die Rollen der Bremsprüfeinrichtung und die Plattform des Radaufhängungstesters in Fahrtrichtung hintereinander angeordnet sind.

Bereits die Maßnahmen, dass die Bremsprüfeinrichtung und der Radaufhängungstester voneinander funktionell getrennte Antriebe aufweisen, ergeben wesentliche Einsparungen hinsichtlich des Aufbaus und der Kosten, da der Rahmen und die damit verbundene Trageinrichtung weitgehend doppelt genutzt werden können.

Eine weitere Verringerung des Aufwands besteht darin, dass die Bremsprüfeinrichtung und der Radaufhängungstester über Koppelmittel zumindest teilweise miteinander gekoppelte oder koppelbare Antriebsmittel besitzen. Beispielsweise kann dabei ein dem Radaufhängungstester zugeordneter Antrieb zum Durchlaufen der oberen Frequenzen ausgelegt sein. Für die unteren Frequenzen kann der ohnehin vorhandene untersetzte Getriebemotor des Bremsprüfstandes eingekuppelt werden, wobei die Kopplung mit Freiläufen, Fliehkraftkupplungen oder sonstigen Anbindungen realisiert werden kann. Auf diese Weise kann ohne großen Aufwand ein breites Frequenzband zwischen z. B. 0,5 Hz bis 25 Hz überstrichen werden, wobei insbesondere auch die obere Resonanzfrequenz, die sich in der Regel zwischen 12 und 18 Hz befindet, und die untere Resonanzfrequenz, die in der Regel zwischen 0,5 und 3 Hz liegt, mit genügender Dauer für eine zuverlässige, verzerrungsfreie Messung durchlaufen werden. Eine ausreichende Anregung sowohl bei hohen als auch bei niedrigen Frequenzen ist mit bisherigen Antriebseinrichtungen schwierig.

Demnach besteht eine weitere vorteilhafte Ausgestaltung darin, dass ein Antriebsmotor der Bremsprüfeinrichtung nur für niedere Schwingungsfrequenzen der Plattform unter 8 Hz genutzt wird. Dabei kann die Ausbildung derart sein, dass ein zwischen der Bremsprüfeinrichtung und dem Radaufhängungstester angeordnetes Koppelmittel antriebsseitig oder abtriebsseitig in einen Freilauf versetzbar oder in eine von zwei Drehrichtungen versetzt ist, und weiterhin derart, dass der Radaufhängungstester einen eigenen Erregungsmotor besitzt und dass bei Freilauf des Koppelmittels die Plattform mit dem Erregungsmotor bei hohen Frequenzen zwischen 10 - 30 Hz antreibbar ist.

Ist bei einer weiteren Ausgestaltung vorgesehen, dass nur mindestens ein der Bremsprüfeinrichtung zugeordneter Antriebsmotor vorgesehen ist, der mit Koppelmitteln mit einer Antriebswelle des Radaufhängungstesters gekoppelt ist, und dass zwischen dem Antriebsmotor und der Antriebswelle mindestens eine Übersetzung für hohe Erregungsfrequenzen zwischen 10 und 30 Hz einschaltbar ist, so können allein mit dem Antriebsmotor der Bremsprüfvorrichtung die für zuverlässige Aussagen zur Radaufhängung erforderlichen niedrigen und hohen Frequenzen erzeugt werden.

Bei den genannten Aufbauten werden die Maßnahmen zum Erzeugen einer geeigneten Erregung der Plattformen dadurch unterstützt, dass die Antriebseinrichtung der Plattform eine Schwungmasse aufweist.

Die Erfindung wird nachfolgend anhand eines Ausführungsbeispiels unter Bezugnahme auf die Zeichnungen näher erläutert. Es zeigen:
- Fig. 1: eine schematische Darstellung eines ersten Ausführungsbeispiels einer Prüfvorrichtung mit Rollen-Bremsprüfeinrichtung und Radaufhängungstester in einem gemeinsamen Rahmen,
- Fig. 2: ein weiteres Ausführungsbeispiel für eine Prüfvorrichtung mit einer Rollen-Bremsprüfeinrichtung und einem Radaufhängungstester in einem gemeinsamen Rahmen und
- Fig. 3: ein weiteres Ausführungsbeispiel für eine Prüfvorrichtung mit einer Rollen-Bremsprüfeinrichtung und einem Radaufhängungstester in einem gemeinsamen Rahmen.

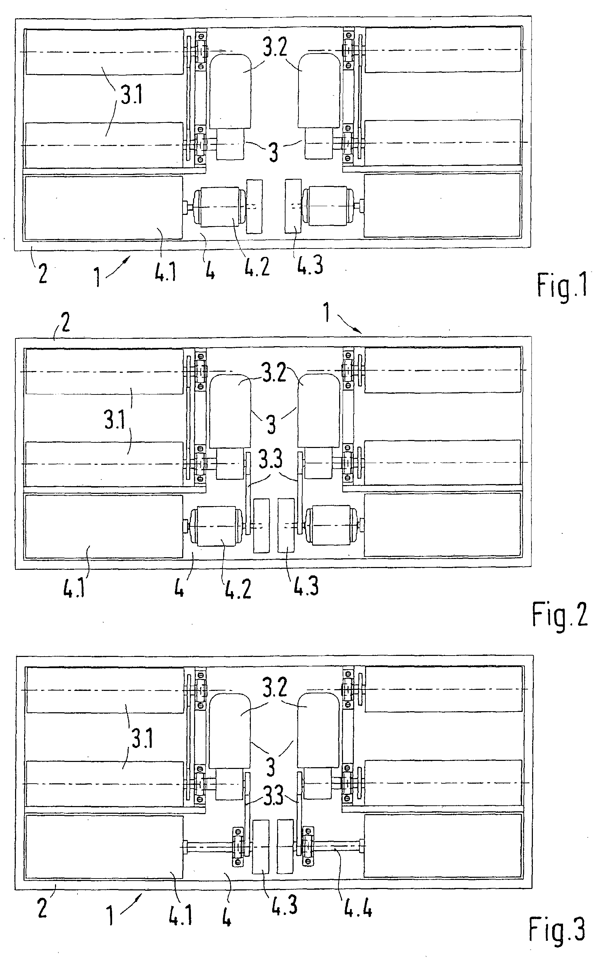

Bei einer in Fig. 1 schematisch in Draufsicht gezeigten Prüfvorrichtung 1 sind innerhalb eines Rahmens 2 eine Rollen-Bremsprüfeinrichtung 3 und ein Radaufhängungstester 4 gelagert.

Die Bremsprüfeinrichtung 3 besitzt zwei nebeneinander angeordnete Paare von Bremsrollen 3.1, auf denen die beiden Räder einer Achse eines Fahrzeugs aufgenommen werden. Den Rollenpaaren ist jeweils ein Antriebsmotor 3.2 für beide Rollen zugeordnet. In Fahrtrichtung vor oder hinter den beiden Rollenpaaren ist jeweils eine Plattform 4.1 innerhalb des Rahmens 2 mit jeweils eigenen Erregungsmotoren 4.2 und diesen zugeordneten Schwungmassen 4.3 angeordnet. Die Kopplung zwischen den Erregermotoren 4.2 und den Plattformen 4.1 kann in an sich bekannter Weise erfolgen.

Bei der in Fig. 2 gezeigten Prüfvorrichtung sind die beiden Antriebsmotoren 3.2 der Bremsprüfeinrichtung 3 mit den Erregungsmotoren 4.2 des Radaufhängungstesters 4 über Koppelmittel 3.3 mit z. B. zuschaltbarer Antriebsriemen, miteinander gekoppelt. Für niedere Erregungsfrequenzen im Bereich von etwa 0,5 Hz und 3 oder 4 Hz werden die Plattformen 4.2 mittels der Antriebsmotoren 3.2 in Schwingungen versetzt, während bei den höheren Frequenzen zwischen etwa 12 und 18 Hz die Erregung mittels der Erregungsmotoren 4.2 erfolgt. Die Freigabe oder Einschaltung der Kopplung über die Koppelmittel 3.3 kann beispielsweise mit einem Freilauf oder einer Kupplung oder dergleichen vorgenommen werden, wobei auch unterschiedliche Drehrichtungen ausgenutzt werden können. Mit den Schwungmassen 4.3 kann zusätzlich eine Abstimmung zur Erzeugung einer günstigen Erregung vorgenommen werden.

Bei dem in Fig. 3 gezeigten Ausführungsbeispiel sind die beiden Antriebsmotoren 3.2 der Bremsprüfeinrichtung 3 über die Koppelmittel 3.3 mit einer Antriebswelle 4.4 zum Erregen der Plattformen 4.1 gekoppelt. Auf den Antriebswellen 4.4 sitzen jeweilige Schwungmassen 4.3. Zum Erzeugen der niedrigen Frequenzen insbesondere zwischen 0,5 und etwa 3 bis 4 Hz einerseits und der hohen Frequenzen insbesondere zwischen 12 und 18 Hz können mindestens zwei verschiedene Übersetzungsverhältnisse genutzt werden. Die Ankopplung der Antriebsmotoren 3.2 an die Antriebswelle 4.4 über die Koppelmittel 3.3 kann beispielsweise über eine Zuschaltung mittels Kupplung, Freilauf, Fliehkraftkupplung oder dergleichen erfolgen. Bei diesem Ausführungsbeispiel werden hierzu eigene Erregungsmotoren 4.2 für den Antrieb der Plattformen 4.1 eingespart.

## Patentansprüche

1. Prüfvorrichtung für Kraftfahrzeuge mit einem Radaufhängungstester (4), der mindestens eine ein Fahrzeugrad aufzunehmende, mittels einer Antriebseinrichtung in Schwingungen versetzbare Plattform (4.1) aufweist,
dadurch gekennzeichnet,
dass der Radaufhängungstester (4) zusammen mit einer Rollen-Bremsprüfeinrichtung (3) in einem gemeinsamen Rahmen (2) gelagert ist.

2. Prüfvorrichtung nach Anspruch 1,
dadurch gekennzeichnet,
dass die Rollen (3.1) der Bremsprüfeinrichtung (3) und die Plattform (4.1) des Radaufhängungstesters (4) in Fahrtrichtung hintereinander angeordnet sind.

3. Prüfvorrichtung nach Anspruch 1 oder 2,
dadurch gekennzeichnet,
dass die Bremsprüfeinrichtung (3) und der Radaufhängungstester (4) voneinander funktionell getrennte Antriebe (3.2, 4.2) aufweisen.

4. Prüfvorrichtung nach Anspruch 1 oder 2,
dadurch gekennzeichnet,
dass die Bremsprüfeinrichtung (3) und der Radaufhängungstester (4) über Koppelmittel (3.3) zumindest teilweise miteinander gekoppelte oder koppelbare Antriebsmittel (3.2, 4.2, 4.3, 4.4) besitzen.

5. Prüfvorrichtung nach Anspruch 4,
dadurch gekennzeichnet,
dass ein Antriebsmotor (3.2) der Bremsprüfeinrichtung nur für niedere Schwingungsfrequenzen der Plattform (4.1) unter 8 Hz genutzt wird.

6. Prüfvorrichtung nach Anspruch 5,
dadurch gekennzeichnet,
dass ein zwischen der Bremsprüfeinrichtung (3) und dem Radaufhängungstester (4) angeordnetes Koppelmittel (3.3) antriebsseitig
oder abtriebsseitig in einen Freilauf versetzbar oder in eine von zwei Drehrichtungen versetzt ist.

7. Prüfvorrichtung nach Anspruch 6,
dadurch gekennzeichnet,
dass der Radaufhängungstester (4) einen eigenen Erregungsmotor (4.2) besitzt und dass bei Freilauf des Koppelmittels (3.3) die Plattform mit dem Erregungsmotor (4.2) bei hohen Frequenzen zwischen 10 - 30 Hz antreibbar ist.

8. Prüfvorrichtung nach einem der Ansprüche 1, 2, 4, 6 oder 7,
dadurch gekennzeichnet,
dass nur mindestens ein der Bremsprüfeinrichtung (3) zugeordneter Antriebsmotor (3.2) vorgesehen ist, der mit Koppelmitteln (3.3) mit einer Antriebswelle (4.4) des Radaufhängungstesters (4) gekoppelt ist, und dass zwischen dem Antriebsmotor (3.2) und der Antriebswelle (4.4) mindestens eine Übersetzung für hohe Erregungsfrequenzen zwischen 10 und 30 Hz einschaltbar ist.

9. Prüfvorrichtung nach einem der vorhergehenden Ansprüche,
dadurch gekennzeichnet,
dass die Antriebseinrichtung der Plattform (4.1) eine Schwungmasse (4.3) aufweist.
